# FASCICULE DE BREVET EUROPEEN

(11) **EP 2 054 862 B1**
(45) Date de publication et mention de la délivrance du brevet: **28.06.2017**
(21) Numéro de dépôt: 07802879.2
(22) Date de dépôt: 24.08.2007
(51) Int. Cl.: G07F 7/10, G06Q 20/34

(54) **PROCEDE DE PERSONNALISATION D'UN COMPOSANT DE SECURITE, NOTAMMENT EN MILIEU NON PROTEGE**
VERFAHREN ZUR INDIVIDUELLEN ANPASSUNG EINER SICHERHEITSKOMPONENTE, IM BESONDEREN IN EINER UNGESICHERTEN UMGEBUNG
METHOD OF CUSTOMIZING A SECURITY COMPONENT, PARTICULARLY IN AN UNPROTECTED ENVIRONMENT

(30) Priorité: 25.08.2006 FR 0607524
(43) Date de publication de la demande: 06.05.2009
(73) Titulaire: THALES, 92400 Courbevoie (FR)
(72) Inventeur: D'ATHIS, Thierry, F-78000 Versailles (FR); DAILLY, Philippe, F-91580 Etrechy (FR); RATIER, Denis, F-91210 Draveil (FR)
(74) Mandataire: Lucas, Laurent Jacques
(86) Numéro de dépôt international: PCT/EP2007/058834
(87) Numéro de publication internationale: WO 2008/023065

(56) Documents cités:
- EP-A- 1 691 250
- EP-A1- 0 671 703
- FR-A- 2 873 467
- FR-A1- 2 767 624
- FR-A1- 2 810 139

## Description

L'invention concerne un procédé de personnalisation d'un composant de sécurité en milieu non protégé. En particulier, l'invention s'applique aux composants de type module d'accès sécurisé (ou selon l'expression anglo-saxonne Security Access Module).

Les composants de type module d'accès sécurisé sont utilisés dans de nombreux systèmes, par exemple au sein de systèmes billettiques. Ces systèmes mettent en oeuvre, à l'aide de ces composants, des procédés cryptographiques remplissant notamment des fonctions de chiffrage/déchiffrage, d'authentification, d'apposition de signatures... Ces différents procédés cryptographiques, quelle que soit la technologie employée, ont besoin, au moins dans leur phase d'initialisation, d'un premier secret (clé symétrique, clé asymétrique, aléas...). Or, du niveau de confidentialité de ce premier secret dépend le niveau de sécurité des fonctions de sécurité du système. En effet, la compromission de ce premier secret entraîne généralement une perte de confiance vis-à-vis de l'ensemble de la chaîne de sécurité dépendante de ce premier secret.

L'introduction d'un premier secret au sein d'un composant de sécurité est généralement accomplie par le fabricant dudit composant. Cette opération est généralement réalisée sur un lot de composants de sécurité, fabriqués en série. Puis, le premier secret est transmis à l'acquéreur du lot de composant de sécurité. A partir de la connaissance de ce premier secret, l'acquéreur souhaite généralement personnaliser le premier secret pour chaque composant en introduisant un secret personnalisé dans chaque composant. Cette étape permet d'améliorer significativement la sécurité du système, notamment en générant un secret connu du seul acquéreur. Mais cette étape se heurte à la connaissance du premier secret, puisqu'il n'est pas possible d'introduire un secret personnalisé sans la connaissance du premier secret. Il en découle que l'introduction du secret personnalisé doit être réalisée dans un domaine sécurisé vis-à-vis notamment du personnel pouvant accéder aux composants au cours de cette étape. Ainsi, les composants sont généralement personnalisés dans des locaux sécurisés.

Pour un système complet, par exemple un système billettique, pouvant comporter un nombre important de dispositifs comprenant des composants de sécurité, répartis sur une zone géographique importante, cette étape de personnalisation s'avère donc longue, coûteuse et peu flexible. Cet inconvénient est particulièrement sensible lors du déploiement d'un tel système.

Une demande de brevet française (FR2873467A) décrit un procédé de personnalisation d'éléments électroniques sécurisés en remplaçant une première clef secrète native par une deuxième clef secrète générée par un module d'authentification à partir notamment de la première clef secrète.

Une demande de brevet internationale (WO2007/0521116A1), non publiée à la date de dépôt de la présente demande, décrit notamment une méthode d'installation et d'initialisation d'un élément sécurisé.

L'invention a notamment pour but de pallier les inconvénients précités. L'invention a pour objet un procédé de personnalisation d'un composant de sécurité comportant :
- une étape d'insertion d'un premier secret K0 dans ledit composant de sécurité, ladite étape étant mise en oeuvre dans un domaine sécurisé sous la responsabilité du fabricant du composant de sécurité
- une étape de génération d'un secret applicatif K et une étape de génération d'un cryptogramme [K]K0 de personnalisation obtenu par chiffrement du secret applicatif K par le premier secret K0, lesdites étapes étant mises en oeuvre dans un domaine sécurisé applicatif sous la responsabilité du détenteur du composant de sécurité ;
- une étape de personnalisation du composant de sécurité par insertion dans ledit composant de sécurité du cryptogramme [K]K0 de personnalisation, ladite étape de personnalisation étant mise en oeuvre dans un domaine applicatif.
Le procédé comporte en outre une étape où le premier secret K0 est inséré dans un composant de cryptage, ladite étape étant mise en oeuvre dans le domaine sécurisé sous la responsabilité du fabricant du composant de sécurité. Le composant de cryptage est utilisé pour chiffrer le secret applicatif K par le premier secret K0 pour générer le cryptogramme [K]K0 de personnalisation.

Dans un mode de réalisation, le nombre d'utilisations possibles du composant de cryptage est limité.

Dans un autre mode de réalisation, un premier secret diversifié K0_{ND} est inséré dans ledit composant de sécurité. Le premier secret diversifié K0_{ND} est obtenu par chiffrement d'une information ND spécifique au composant de sécurité à l'aide d'un secret maître KM. Le secret applicatif K est inséré à l'étape de personnalisation du composant de sécurité par chargement du cryptogramme [K]K0_{ND} de personnalisation. L'information ND peut être le numéro de série NS du composant de sécurité, ou dérivée du numéro de série NS et/ou d'un compteur N d'utilisations irréversible.

Avantageusement, la fonction de chargement du secret applicatif K dans le composant de sécurité de série est irréversible.

L'invention a notamment pour avantages qu'elle permet aux données sensibles chargées dans un composant de sécurité de rester confidentielles à tout moment :
- Vis-à-vis de toute personne extérieure au système, même hostile, et assistant à l'opération de personnalisation ;
- Vis-à-vis de toute personne opérant la personnalisation, qu'il soit administrateur ou simple agent ;
- Vis-à-vis de toute personne intérieure au système applicatif (concepteur, développeur...).
En outre, la personnalisation des composants s'effectue sans besoin de connexion externe. Les données confidentielles peuvent être protégées du clonage, l'opération de clonage consistant à rejouer les échanges sur un autre composant du même type. Les données confidentielles peuvent être protégées du re-jeu sur le même composant.

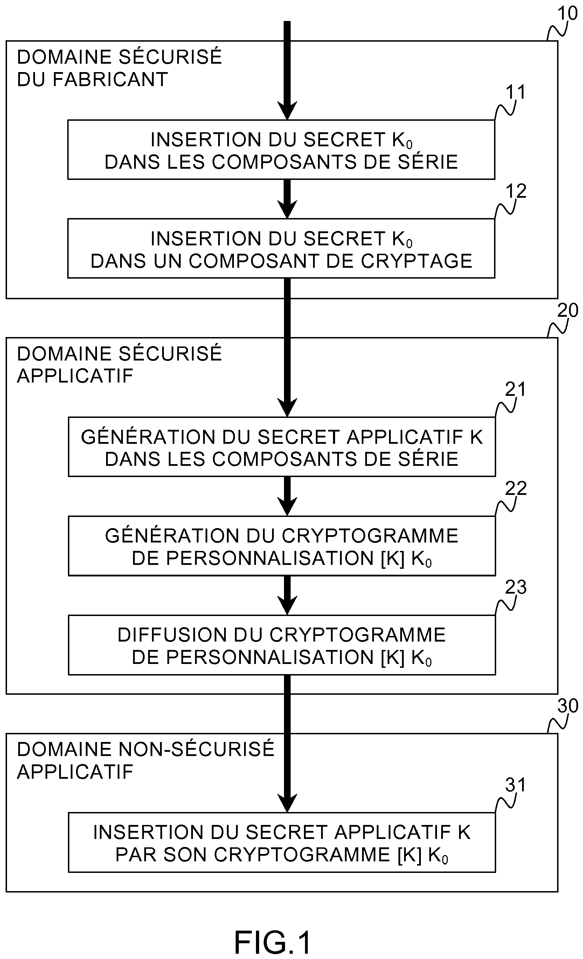

D'autres caractéristiques et avantages de l'invention apparaîtront à l'aide de la description qui suit faite en regard des dessins annexés qui représentent, la figure 1, un synoptique du procédé selon l'invention de personnalisation d'un composant de sécurité en milieu non protégé.

La figure 1 illustre par un synoptique le procédé selon l'invention de personnalisation d'un composant de sécurité en milieu non protégé. Le procédé selon l'invention a notamment pour objet d'amener dans un composant de sécurité un secret applicatif K, qui ne puisse être fabriqué et utilisé qu'à l'aide d'un premier secret K0 obtenu d'un tiers de confiance. Le tiers de confiance est par exemple le fabricant du composant lui-même. Le composant de sécurité est par exemple de type module d'accès sécurisé (ou selon l'acronyme anglo-saxon SAM pour Security Access Module).

Ainsi, dans une étape 11, le fabricant insère dans le composant de sécurité le premier secret K0. Le premier secret K0 peut être inséré physiquement dans le circuit électrique du composant de sécurité ou dans le microprogramme du composant de sécurité (ou selon l'expression anglo-saxonne firmware). Au cours de cette étape 11, le premier secret K0 peut être inséré dans un nombre important de composants de sécurité formant un ou plusieurs lots, fabriqués en série.

Dans une étape 12, le fabricant peut insérer le premier secret K0, utilisé notamment à l'étape 11, dans un composant de cryptage, afin de disposer d'un moyen sécurisé permettant de diffuser à l'acquéreur du composant de sécurité le premier secret K0. Le composant de cryptage est un moyen adapté à la génération du secret applicatif K à l'aide de son secret K0. Pour autant, idéalement, le composant de cryptage ne propose aucun moyen d'accès au premier secret K0 ou en limite l'accès en rendant la compréhension ou l'accès physique difficile. Par exemple, le composant de cryptage adapté à la génération du secret applicatif K peut être un composant de sécurité de type module d'accès sécurisé, capable de coder toute valeur par le premier secret K0, non extractible. Ainsi, l'insertion du premier secret K0 dans le composant de cryptage permet au fabricant du composant de ne plus nécessairement assurer le maintien de secrets autres que le secret K0. En effet, le composant de cryptage est livré à l'issue de l'étape 12 à l'acquéreur de la série de composants de sécurité renfermant le premier secret K0 à l'issue de l'étape 11. L'acquéreur pourra alors générer un cryptogramme [K]K0 de personnalisation à partir du premier secret K0 basé sur un secret K applicatif.

Les opérations conduites au sein des étapes 11 et 12 sont réalisées dans un domaine sécurisé 10 sous la responsabilité du fabricant du composant de sécurité. En effet, la découverte du premier secret K0 par un attaquant lui permettrait de trouver le secret applicatif K en surveillant le cryptogramme [K]K0. C'est pourquoi le secret K0 ne doit pas être connu hors du domaine sécurisé 10 sous la responsabilité du fabricant. En outre, le fabricant doit être de confiance pour garantir la sécurité des systèmes mettant en oeuvre lesdits composants de sécurité. Le composant de cryptage est sensible car il détient le secret K0 du fabricant d'une part, et d'autre part, il peut subir une attaque consistant à découvrir le secret applicatif K. En effet, utiliser le composant de cryptage en décryptage permettrait de découvrir le secret applicatif K à partir de la connaissance du cryptogramme [K]K0, même sans connaître le premier secret K0. Pour cette raison, le composant de cryptage doit être protégé en autorisant l'utilisation de la fonction de cryptage et en interdisant l'utilisation de la fonction de décryptage. Dans un mode de réalisation, l'attaque du composant de cryptage peut être rendue plus difficile en limitant le nombre d'utilisations possibles du composant de cryptage. Cette limitation peut être introduite par le fabricant du composant de cryptage.

Dans une étape 21, le secret applicatif K est généré. Puis dans une étape 22, le cryptogramme [K]K0 de personnalisation est généré. Le cryptogramme de personnalisation correspond au chiffrement du secret applicatif K applicatif généré à l'étape 21 par le premier secret K0. Le cryptogramme [K]K0 de personnalisation est obtenu en utilisant le composant de cryptage pour chiffrer le secret K à l'aide du premier secret K0. Le cryptogramme [K]K0 de personnalisation n'a pas nécessairement à être tenu secret. Le cryptogramme [K]K0 de personnalisation est ensuite diffusé dans une étape 23 à d'autres personnes, par exemple à des personnes en charge du déploiement du système.

Les opérations conduites au sein des étapes 21, 22 sont réalisées dans un domaine sécurisé applicatif 20 du ressort du détenteur des composants de sécurité. Ces opérations doivent être réalisées dans un cadre sécurisé : par exemple, elles peuvent être conduites dans une phase de paramétrage du système dans des locaux sécurisés.

Puis dans une étape 31, le composant de sécurité est personnalisé par insertion du cryptogramme [K]K0 de personnalisation généré à l'étape 22 et diffusé à l'étape 23 hors du domaine sécurisé applicatif 20. Le composant de sécurité comprend alors le cryptogramme [K]K0 de personnalisation ainsi que le premier secret K0 inséré par le constructeur à l'étape 11. Ainsi, le composant de sécurité obtient la connaissance du secret applicatif K.

Les opérations conduites au sein de l'étape 31 sont réalisées dans un domaine non sécurisé applicatif 30. Ces opérations ne doivent pas nécessairement être réalisées dans un cadre sécurisé : par exemple, elles peuvent être conduites dans une phase d'installation d'un système dans un endroit quelconque sans surveillance particulière.

Dans un mode de réalisation, une fonction anti-clonage est implémentée dans le composant de sécurité. Le premier secret K0 compris dans les composants de sécurité d'un ou plusieurs lots fabriqués en série est diversifié pour garantir un niveau de sécurité adapté au besoin du système. Aussi, afin d'introduire un premier secret différent pour chaque composant de sécurité compris dans les différents lots et pour éviter la fabrication d'autant de composants de cryptage que de composants de sécurité, il est nécessaire de générer des premiers secrets obtenus par diversification d'un secret maître KM. Ainsi la méthode de génération des premiers secrets obtenus par diversification du premier secret K0 doit être déterministe. Pour cela, chaque composant de sécurité de série est fabriqué avec un premier secret diversifiée K0_{ND} obtenu par le cryptage d'une information ND (Numéro Diversifiant) par le secret KM, soit K0_{ND}= [ND]KM. L'information ND peut être le numéro de série NS du composant de sécurité. Le premier secret diversifié K0_{ND} peut s'obtenir à l'aide d'un seul composant de cryptage pour l'ensemble des composants de sécurités des différents lots. Le secret applicatif K est ensuite inséré à l'étape 31 en chargeant le cryptogramme [K]K0_{ND} de personnalisation. Le cryptogramme [K]K0_{ND} de personnalisation ne sera utilisable pour le chargement du secret applicatif K que sur le composant de sécurité dont le numéro diversifiant sera égal à l'information ND.

Dans un mode de réalisation, une fonction anti-rejeu est implémentée dans le composant de sécurité. Par exemple, la commande de rechargement du secret applicatif K dans le composant de sécurité de série est irréversible. En outre, il peut être imposé de faire dépendre le N+1^{ème} chargement du secret K, noté K_{N+1}, du secret K_{N}, ou du secret K0 modifié par la valeur N (par exemple [N]K0), le composant utilisant alors un compteur irréversible d'utilisations contenant la valeur N. Le retour à l'état d'usine du composant de sécurité est donc impossible.

Ces deux modes de réalisation, la diversification du premier secret K0 et la fonction anti-rejeu, peuvent être combinés, permettant ainsi de faire dépendre le chargement du secret K_{N+1} du secret [ND]K_{N}, du secret [N]K0_{ND}, ou de toute autre combinaison de ND, NS, N, K_{N} et K0_{ND} variant d'un composant à l'autre et d'un chargement à l'autre.

## Revendications

1. Procédé de personnalisation d'un composant de sécurité comportant :
• une étape (11) d'insertion d'un premier secret K0 dans ledit composant de sécurité, ladite étape (11) étant mise en oeuvre dans un domaine sécurisé (10) sous la responsabilité du fabricant du composant de sécurité ;
• une étape (21) de génération d'un secret applicatif K et une étape (22) de génération d'un cryptogramme [K]K0 de personnalisation obtenu par chiffrement du secret applicatif K par le premier secret K0, lesdites étapes (21, 22) étant mises en oeuvre dans un domaine sécurisé applicatif (20) sous la responsabilité du détenteur du composant de sécurité ;
• une étape (31) de personnalisation du composant de sécurité par insertion dans ledit composant de sécurité du cryptogramme [K]K0 de personnalisation, ladite étape (31) de personnalisation étant mise en oeuvre dans un domaine applicatif (30).
**caractérisé en ce qu'**il comporte en outre une étape (12) où le premier secret K0 est inséré dans un composant de cryptage, ladite étape (12) étant mise en oeuvre dans le domaine sécurisé (10) sous la responsabilité du fabricant du composant de sécurité, ledit composant de cryptage étant utilisé pour chiffrer le secret applicatif K par le premier secret K0 pour générer (22) le cryptogramme [K]K0 de personnalisation.

2. Procédé selon la revendication 1 **caractérisé en ce que** le nombre d'utilisations possibles du composant de cryptage est limité.

3. Procédé selon l'une des quelconques revendications 1 et 2 **caractérisé en ce que** le premier secret diversifié K0, inséré (11) dans ledit composant de sécurité, est un premier secret diversifié K0_{ND} obtenu par chiffrement d'une information ND spécifique au composant de sécurité à l'aide d'un secret maître KM, le secret applicatif K étant inséré à l'étape (31) de personnalisation du composant de sécurité par chargement du cryptogramme [K]K0_{ND} de personnalisation.

4. Procédé selon la revendication 3 **caractérisé en ce que** l'information ND est le numéro de série NS du composant de sécurité, ou dérivée du numéro de série NS et/ou d'un compteur N d'utilisations irréversibles.

5. Procédé selon l'une des quelconques revendications 1 à 4 **caractérisé en ce que** la fonction de chargement du secret applicatif K dans le composant de sécurité de série est irréversible.

## Patentansprüche

1. Verfahren zum Anpassen einer Sicherheitskomponente, das Folgendes umfasst:
• einen Schritt (11) des Einführens eines ersten Geheimnisses K0 in die Sicherheitskomponente, wobei der Schritt (11) in einem Sicherheitsbereich (10) unter der Verantwortlichkeit des Herstellers der Sicherheitskomponente ausgeführt wird;
• einen Schritt (21) des Erzeugens eines Applikationsgeheimnisses K und einen Schritt (22) des Erzeugens eines Anpassungskryptogramms [K]K0, erhalten durch Verschlüsseln eines Applikationsgeheimnisses K mit dem ersten Geheimnis K0, wobei die Schritte (21, 22) in einem Applikationssicherheitsbereich (20) unter der Verantwortung des Besitzers der Sicherheitskomponente ausgeführt wird;
• einen Schritt (31) des Anpassens der Sicherheitskomponente durch Einführen des Anpassungskryptogramms [K]K0 in die Sicherheitskomponente, wobei der Anpassungsschritt (31) in einem Applikationsbereich (30) ausgeführt wird,
**dadurch gekennzeichnet, dass** es ferner einen Schritt (12) umfasst, in dem das erste Geheimnis K0 in eine Codierungskomponente eingeführt wird, und wobei der Schritt (12) im Sicherheitsbereich (10) unter der Verantwortung des Herstellers der Sicherheitskomponente ausgeführt wird, wobei die Codierungskomponente zum Codieren des Applikationsgeheimnisses K durch das erste Geheimnis K0 benutzt wird, um das Anpassungskryptogramm [K]K0 zu erzeugen (22).

2. Verfahren nach Anspruch 1, **dadurch gekennzeichnet, dass** die Anzahl der möglichen Nutzungen der Codierungskomponente begrenzt ist.

3. Verfahren nach einem der Ansprüche 1 und 2, **dadurch gekennzeichnet, dass** das erste diversifizierte Geheimnis K0, eingeführt (11) in die Sicherheitskomponente, ein erstes diversifiziertes Geheimnis K0_{ND} ist, erhalten durch Codieren einer Information ND, die für die Sicherheitskomponente spezifisch ist, mit Hilfe eines Master-Geheimnisses KM, wobei das Applikationsgeheimnis K im Schritt (31) des Anpassens der Sicherheitskomponente durch Laden des Anpassungskryptogramms [K]K0_{ND} eingeführt wird.

4. Verfahren nach Anspruch 3, **dadurch gekennzeichnet, dass** die Information ND die Seriennummer NS der Sicherheitskomponente oder von der Seriennummer NS und/oder von einem Zähler N von irreversiblen Nutzungen abgeleitet ist.

5. Verfahren nach einem der Ansprüche 1 bis 4, **dadurch gekennzeichnet, dass** die Funktion des Ladens des Applikationsgeheimnisses K in die Seriensicherheitskomponente irreversibel ist.

## Claims

1. Method of customizing a security component comprising:
• a step (11) of inserting a first secret K0 into said security component, said step (11) being implemented in a secure domain (10) under the responsibility of the manufacturer of the security component;
• a step (21) of generating an application secret K and a step (22) of generating a customization cryptogram [K]K0 obtained by encrypting the application secret K with the first secret K0, said steps (21, 22) being implemented in a secure application domain (20) under the responsibility of the holder of the security component;
• a step (31) of customizing the security component by inserting into said security component the customization cryptogram [K]K0, said step (31) of customizing being implemented in an application domain (30).
**characterised in that** it additionally comprises a step (12) where the first secret K0 is inserted into an encryption component, said step (12) being implemented in the secure domain (10) under the responsibility of the manufacturer of the security component, said encryption component being used to encrypt the application secret K by the first secret K0 to generate (22) the customization cryptogram [K]K0.

2. Method according to claim 1 **characterised in that** the number of possible applications of the encryption component is limited.

3. Method according to any one of claims 1 and 2 **characterised in that** the diversified first secret K0, inserted (11) into said security component, is a diversified first secret K0_{ND} obtained by encrypting an information ND specific to the security component with the aid of a master secret KM, the application secret K being inserted in step (31) of customizing the security component by loading the customization cryptogram [K]K0_{ND}.

4. Method according to claim 3 **characterised in that** the information ND is the serial number NS of the security component, or derived from the serial number NS and/or from a counter N of irreversible uses.

5. Method according to any one of claims 1 to 4 **characterised in that** the function of loading the application secret K into the series security component is irreversible.
